# EUROPÄISCHE PATENTSCHRIFT

(11) **EP 2 655 122 B1**
(45) Veröffentlichungstag und Bekanntmachung des Hinweises auf die Patenterteilung: **06.03.2019**
(21) Anmeldenummer: 11784429.0
(22) Anmeldetag: 16.11.2011
(51) Int. Cl.: B60L 11/18

(54) **KRAFTFAHRZEUGVORRICHTUNG**
MOTOR VEHICLE DEVICE
DISPOSITIF DE VÉHICULE À MOTEUR

(30) Priorität: 23.12.2010 DE 102010055925
(43) Veröffentlichungstag der Anmeldung: 30.10.2013
(73) Patentinhaber: Daimler AG, 70327 Stuttgart (DE)
(72) Erfinder: BAIER, Karheinz, 73760 Ostfildern (DE); KRONEWITTER, Matthias, 73730 Esslingen (DE); WEBER, Thomas, 71083 Herrenberg (DE)
(74) Vertreter: JENSEN & SON
(86) Internationale Anmeldenummer: PCT/EP2011/005758
(87) Internationale Veröffentlichungsnummer: WO 2012/084099

(56) Entgegenhaltungen:
- EP-A1- 2 431 212
- EP-A1- 2 431 214

## Beschreibung

Die Erfindung betrifft eine Kraftfahrzeugvorrichtung nach dem Oberbegriff des Anspruchs 1.

Aus der US 2010/0109604 A1 ist bereits eine Kraftfahrzeugvorrichtung, insbesondere eine Elektro- und/oder Hybridkraftfahrzeugvorrichtung, mit einer Ladevorrichtung zum Laden einer Akkuvorrichtung, die eine erste Ladeeinheit, die zum Laden der Akkuvorrichtung ein Steckerelement aufweist, das für eine kontaktbehaftete Energieübertragung vorgesehen ist, und eine zweite Ladeeinheit, die zum Laden der Akkuvorrichtung eine Energieübertragungseinheit aufweist, die für eine kontaktlose Energieübertragung vorgesehen ist, aufweist, bekannt.

Ferner offenbart die EP 2 431 214 A1 eine Fahrzeugladeeinheit und die EP 2 431 212 A1 eine kontaktlose Leistungsempfangsvorrichtung sowie ein Fahrzeug mit einer solchen.

Der Erfindung liegt insbesondere die Aufgabe zugrunde, eine konstruktiv einfache Kraftfahrzeugvorrichtung bereitzustellen, die insbesondere eine geringe Bauteilezahl aufweist. Sie wird gemäß der Erfindung durch die Merkmale des Anspruchs 1 gelöst. Weitere Ausgestaltungen ergeben sich aus den Unteransprüchen.

Die Erfindung geht aus von einer Kraftfahrzeugvorrichtung, insbesondere einer Elektro- und/oder Hybridkraftfahrzeugvorrichtung, mit einer Ladevorrichtung zum Laden einer Akkuvorrichtung, die eine erste Ladeeinheit, die zum Laden der Akkuvorrichtung ein Steckerelement aufweist, das für eine kontaktbehaftete Energieübertragung vorgesehen ist, und eine zweite Ladeeinheit, die zum Laden der Akkuvorrichtung eine Energieübertragungseinheit aufweist, die für eine kontaktlose Energieübertragung vorgesehen ist, aufweist.

Es wird vorgeschlagen, dass die Ladevorrichtung eine Ladeelektronik aufweist, die wenigstens teilweise einstückig für die zumindest zwei Ladeeinheiten vorgesehen ist. Dadurch kann insbesondere auf eine separate Ladeelektronik für jede Ladeeinheit verzichtet werden, wodurch insbesondere eine Bauteilezahl klein gehalten werden kann. Unter einer "Akkuvorrichtung" soll dabei insbesondere eine Vorrichtung zum temporären Speichern elektrischer Energie verstanden werden. Unter einem "Steckerelement" soll dabei insbesondere ein Stecker mit integrierten elektrischen Kontakten verstanden werden, der zur Herstellung einer elektrischen Verbindung mit einem korrespondierend ausgebildeten Steckerelement mechanisch trennbar verbindbar ist. Unter einer "Energieübertragungseinheit" soll dabei insbesondere eine Einheit verstanden werden, die dazu vorgesehen ist, kontaktlos eine elektrische Energie zu empfangen oder zu versenden. Vorzugsweise sind dabei zwei Energieübertragungseinheiten für eine kontaktlose Übertragung von elektrischer Energie über eine definierte Distanz vorgesehen. Vorzugsweise weist die Energieübertragungseinheit dabei zumindest eine Spule auf. Unter einem "Ladevorgang" soll dabei insbesondere ein Vorgang verstanden werden, bei dem eine Akkuvorrichtung eines Kraftfahrfahrzeugs über die Energieübertragungseinheiten funktionell mit einer externen Stromquelle verbunden wird und so mit einer elektrischen Energie geladen wird. Unter einer "kontaktlosen Energieübertragung" soll hier insbesondere eine elektromagnetische, vorzugsweise eine induktive Energieübertragung verstanden werden. Unter "vorgesehen" soll insbesondere speziell programmiert, ausgelegt und/oder ausgestattet verstanden werden. Unter einer "Ladeelektronik" soll hierbei insbesondere eine Kombination von elektrischen Hochvolt-Bauteilen verstanden werden, die zumindest für einen Lade- und/oder Entladevorgang vorgesehen sind.

Weiter wird erfindungsgemäß vorgeschlagen, dass die Ladeelektronik eine Umschalteinheit aufweist, mittels der zwischen den beiden Ladeeinheiten umgeschaltet werden kann. Dadurch kann vorteilhaft zwischen den beiden Ladeeinheiten umgeschaltet werden, um die Akkuvorrichtung über eine der Ladeeinheiten zu laden. Unter einer "Umschalteinheit" soll insbesondere eine Schaltungslogik verstanden werden, die zwei Eingänge für die Ladeeinheiten und einen Ausgang aufweist, den sie mit einem der Eingänge der Ladeeinheiten funktionell verbinden kann.

Weiterhin wird vorgeschlagen, dass die Ladeelektronik einen Gleichrichter aufweist, der dazu vorgesehen ist, für beide Ladeeinheiten eine Energieübertragung bereitzustellen. Dadurch kann insbesondere ein Strom von der ersten und der zweiten Ladeeinheit vorteilhaft umgewandelt werden. Unter einem "Gleichrichter" soll insbesondere eine Vorrichtung verstanden werden, die dazu vorgesehen ist, einen Wechselstrom in einen Gleichstrom umzuwandeln.

Ferner wird erfindungsgemäß vorgeschlagen, dass die Kraftfahrzeugvorrichtung eine Steuer- und/oder Regeleinheit aufweist, die für eine Erkennung der aktiven Ladeeinheit vorgesehen ist. Dadurch kann besonders vorteilhaft und einfach erkannt werden über welche Ladeeinheit die Akkuvorrichtung geladen werden kann. Unter einer "Steuer- und/oder Regeleinheit" soll insbesondere eine Einheit mit zumindest einem Steuergerät verstanden werden. Unter einem "Steuergerät" soll insbesondere eine Einheit mit einer Prozessoreinheit und mit einer Speichereinheit sowie mit einem in der Speichereinheit gespeicherten Betriebsprogramm verstanden werden. Grundsätzlich kann die Steuer- und/oder Regeleinheit mehrere untereinander verbundene Steuergeräte aufweisen, die vorzugsweise dazu vorgesehen sind, über ein Bus-System, wie insbesondere ein CAN-Bus-System, miteinander zu kommunizieren. Unter "aktiv" soll in diesem Zusammenhang insbesondere mit dem externen Stromnetz verbunden verstanden werden. Vorzugsweise kann die Akkuvorrichtung über eine "aktive Ladeeinheit" geladen werden.

Zudem wird vorgeschlagen, dass die Steuer- und/oder Regeleinheit dazu vorgesehen ist, die Akkuvorrichtung über die Umschalteinheit mit der aktiven Ladeeinheit zu verbinden. Dadurch kann die Ladeeinheit vorteilhaft einfach mit der Akkuvorrichtung verbunden werden über die ein Ladevorgang erfolgen kann. Unter "verbinden" soll dabei insbesondere einen elektrischen Kontakt herstellen verstanden werden. Vorzugsweise kann der elektrische Kontakt dabei auch durch mehrere Bauteile erfolgen.

Des Weiteren wird erfindungsgemäß vorgeschlagen, dass die Steuer- und/oder Regeleinheit bei einer gleichzeitigen Aktivierung der Ladeeinheiten dazu vorgesehen ist, die Umschalteinheit in Abhängigkeit von zumindest einem Ladeparameter zu schalten. Dadurch kann vorteilhaft eine situationsbedingt optimale Lademöglichkeit genutzt werden. Unter einer "gleichzeitigen Aktivierung" soll dabei insbesondere verstanden werden, dass beide Ladeeinheiten zu einem Zeitpunkt aktiv sind. Vorzugsweise werden die beiden Ladeeinheiten dabei nacheinander aktiv. Grundsätzlich ist es auch denkbar, dass die Ladeeinheiten gleichzeitig aktiv werden. Unter einem "Ladeparameter" sollen insbesondere auf der Steuer- und/oder Regeleinheit hinterlegte Daten verstanden werden, die mit aktuellen Daten des bevorstehenden und/oder aktuellen Ladevorgangs abgeglichen werden.

Außerdem wird vorgeschlagen, dass der Ladeparameter erfindungsgemäß von einem Ladezustand der Akkuvorrichtung und bevorzugt auch von einer verfügbaren Ladezeit abhängig ist. Dadurch kann der Ladevorgang vorteilhaft auf die aktuelle Situation abgestimmt werden. Unter einem "Ladezustand der Akkuvorrichtung" soll insbesondere ein Energiegehalt der Akkuvorrichtung verstanden werden, der insbesondere über eine Spannung der Akkuvorrichtung in unbelastetem Zustand bestimmbar ist. Unter einer "verfügbaren Ladezeit" soll dabei insbesondere eine Zeit verstanden werden die für den bevorstehenden bzw. aktuellen Ladevorgang zur Verfügung steht. Vorzugsweise wird die "verfügbare Ladezeit" dabei vor dem Ladevorgang von einem Bediener eingegeben.

In einer besonders vorteilhaften Ausgestaltung weist die Kraftfahrzeugvorrichtung ein Bedienelement auf, das dazu vorgesehen ist, einem Bediener die direkte Auswahl der Ladeeinheit zu ermöglichen. Dadurch kann ein Bediener insbesondere vorteilhaft selbst die vorteilhafte Ladeeinheit auswählen. Unter einem" Bedienelement" soll insbesondere ein Element verstanden werden, das dazu vorgesehen ist, bei einem Bedienvorgang eine Eingabegröße von einem Bediener aufzunehmen und insbesondere unmittelbar von einem Bediener kontaktiert zu werden, wobei ein Berühren des Bedienelements sensiert und/oder eine auf das Bedienelement ausgeübte Betätigungskraft sensiert und/oder mechanisch zur Betätigung einer Einheit weitergeleitet wird.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

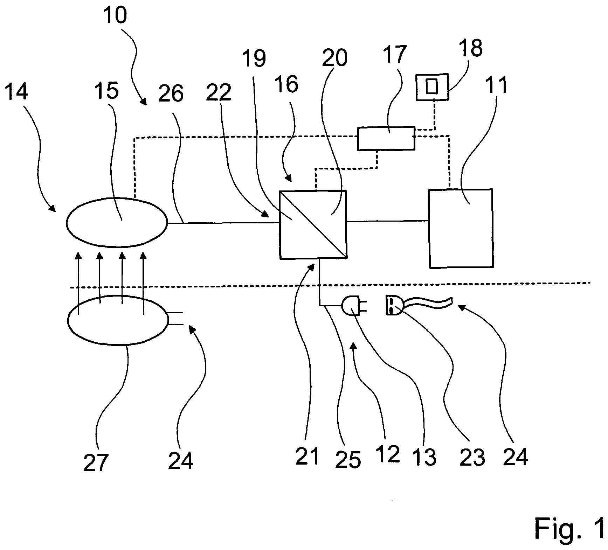

Die Figur 1 zeigt eine schematische Darstellung einer Kraftfahrzeugvorrichtung, insbesondere einer Elektro- und/oder Hybridkraftfahrzeugvorrichtung für ein Kraftfahrzeug. Das Kraftfahrzeug ist als ein Elektro- und/oder Hybridkraftfahrzeug ausgebildet. Das Kraftfahrzeug weist für einen Antrieb einen teilweise dargestellten Antriebsstrang mit einer Elektromotorantriebseinheit auf. Grundsätzlich ist es auch denkbar, dass der Antriebsstrang mehrere Elektromotorantriebseinheiten aufweist. Das Kraftfahrzeug weist eine Akkuvorrichtung 11 auf, die dazu vorgesehen ist, zumindest die Elektromotorantriebseinheit mit Energie zu versorgen. Grundsätzlich ist es auch denkbar, dass das Kraftfahrzeug zusätzlich zu der zumindest einen Elektromotorantriebseinheit zumindest eine Brennkraftmaschine in dem Antriebsstrang aufweist.

Die Akkuvorrichtung 11 umfasst eine Hochvolt-Batterie. Die Akkuvorrichtung 11 stellt eine Gleichspannung bereit, die wenigstens 100 Volt beträgt. Die Hochvolt-Batterie umfasst eine Mehrzahl hintereinander geschalteter Einzelzellen. Eine minimale Batteriespannung beträgt 105,6 Volt. Eine maximale Batteriespannung beträgt 413 Volt, wobei die maximale Batteriespannung grundsätzlich auch größer sein kann. Die Akkuvorrichtung 11 weist zwei Batterieklemmen auf, die jeweils einen definierten Pol der Akkuvorrichtung 11 ausbilden.

Die Elektromotorantriebseinheit ist als ein Drehstrommotor ausgebildet. Die Elektromotorantriebseinheit umfasst drei Motorspulen. Für eine Energieversorgung umfasst die Elektromotorantriebseinheit drei getrennte Phasen. In einem Fahrbetriebsmodus erzeugt die Elektromotorantriebseinheit aus einer ihr zugeführten elektrischen Leistung ein Antriebsmoment. In einem Generatorbetriebsmodus erzeugt die Elektromotorantriebseinheit aus einer ihr zugeführten mechanischen Leistung, die der Elektromotorantriebseinheit beispielsweise über Antriebsräder zugeführt werden kann, elektrische Leistung.

Zum Laden der Akkuvorrichtung 11 weist die Kraftfahrzeugvorrichtung eine Ladevorrichtung 10 auf. Die Ladevorrichtung 10 umfasst eine erste Ladeeinheit 12 und eine zweite Ladeeinheit 14. Die Ladevorrichtung 10 weist eine Ladeelektronik 16 auf. Die Ladeelektronik 16 ist für beide Ladeeinheiten 10, 14 vorgesehen. Die Ladeelektronik 16 weist eine Umschalteinheit 19 auf. Die Umschalteinheit 19 weist einen ersten Eingang 21 und einen zweiten Eingang 22 auf. Der erste Eingang 21 ist mit der ersten Ladeeinheit 12 und der zweite Eingang 22 mit der zweiten Ladeeinheit 14 verbunden.

Die Ladeelektronik 16 weist einen Gleichrichter 20 auf, der dazu vorgesehen ist, für beide Ladeeinheiten 12, 14 eine Energieübertragung bereitzustellen. Der Gleichrichter 20 weist zum Gleichrichten der Spannungen und Ströme der Ladeeinheiten 12, 14 eine nicht näher dargestellte Schaltungslogik auf. In einem Ladevorgang, bei dem die Akkuvorrichtung 11 über die erste Ladeeinheit 12 geladen wird, wandelt der Gleichrichter 20 einen Drehstrom, der von der ersten Ladeeinheit 12 über die Umschalteinheit 19 in den Gleichrichter 20 geleitet wird, in einen Gleichstrom um. In einem Ladevorgang, in dem die Akkuvorrichtung 11 über die zweite Ladeeinheit 14 geladen wird, wandelt der Gleichrichter 20 einen Wechselstrom, der von der zweiten Ladeeinheit 14 über die Umschalteinheit 19 in den Gleichrichter 20 geleitet wird, in einen Gleichstrom um.

Die erste Ladeeinheit 12 umfasst ein Steckerelement 13, das für eine kontaktbehaftete Energieübertragung vorgesehen ist. Für einen Ladevorgang ist das Steckerelement 13 dazu vorgesehen, mit einem korrespondierenden Steckerelement 23, das mit einem externen Stromnetz 24 verbunden ist, mechanisch trennbar verbunden zu werden. Die Ladeeinheit 12 umfasst einen Leiter 25, der das Steckerelement 13 mit dem ersten Eingang 21 der Umschalteinheit 19 verbindet. Der Leiter 25 ist zumindest teilweise als ein kunststoffummanteltes Kabel ausgebildet.

Die zweite Ladeeinheit 14 weist zum Laden der Akkuvorrichtung 11 eine fahrzeugseitige Energieübertragungseinheit 15 auf. Die fahrzeugseitige Energieübertragungseinheit 15 ist für eine kontaktlose Energieübertragung vorgesehen. Für die kontaktlose Energieübertragung weist die fahrzeugseitige Energieübertragungseinheit 15 zumindest eine Spule auf. Die Ladeeinheit 14 umfasst einen Leiter 26, der die fahrzeugseitige Energieübertragungseinheit 15 mit dem zweiten Eingang 22 der Umschalteinheit 19 verbindet. Die fahrzeugseitige Energieübertragungseinheit 15 ist in einem Ladevorgang als eine Energieempfangseinheit ausgebildet. Die Energieübertragungseinheit 15 ist fest in dem Kraftfahrzeug integriert. Die fahrzeugseitige Energieübertragungseinheit 15 ist an einem Kraftfahrzeugunterboden angebracht. Grundsätzlich ist es auch denkbar, dass die fahrzeugseitige Energieübertragungseinheit 15 an einer anderen Stelle des Elektro- und/oder Hybridkraftfahrzeugs angebracht ist.

Die fahrzeugseitige Energieübertragungseinheit 15 ist dazu vorgesehen, mit einer stationären Energieübertragungseinheit 27 funktional verbunden zu werden. Die stationäre Energieübertragungseinheit 27 ist ortsfest in einer Umgebung, beispielsweise auf einem Garagenboden oder einem anderen Ort, der mittels des Kraftfahrzeugs gut erreichbar ist, angebracht. Die stationäre Energieübertragungseinheit 27 ist mit dem externen Stromnetz 24 verbunden. Für eine kontaktlose Energieübertragung weist die stationäre Energieübertragungseinheit 27 zumindest eine Spule auf. In dem Ladevorgang der Akkuvorrichtung 11 des Kraftfahrzeugs ist die stationäre Energieübertragungseinheit 27 als eine Energiesendeeinheit ausgebildet. Die stationäre Energieübertragungseinheit 27 ist dabei vorzugsweise immer auf einem Boden angebracht, es ist aber auch denkbar, dass die stationäre Energieübertragungseinheit 27 an einer anderen Position, beispielsweise einer Wand, angeordnet ist. Dafür müsste die fahrzeugseitige Energieübertragungseinheit 15 der zweiten Ladeeinheit 14 entsprechend an dem Kraftfahrzeug angebracht werden, um eine Kopplung der beiden Energieübertragungseinheiten 15, 27 zu ermöglichen.

Die Kraftfahrzeugvorrichtung weist eine Steuer- und Regeleinheit 17 auf. Die Steuer- und Regeleinheit 17 regelt zumindest die Elektromotorantriebseinheit und den Ladevorgang der Akkuvorrichtung 11. Die Steuer- und Regeleinheit 17 erkennt durch eine nicht näher dargestellte Sensorvorrichtung welche der beiden Ladeeinheiten 12, 14 aktiv, also mit dem externen Stromnetz verbunden ist. Die Steuer- und Regeleinheit 17 verbindet die Akkuvorrichtung 11 dann über die Umschalteinheit 19 lediglich mit der aktiven Ladeeinheit 12, 14 indem sie die Umschalteinheit 19 dementsprechend ansteuert.

Auf der Steuer- und Regeleinheit 17 ist ein Ladeparameter hinterlegt. Der Ladeparameter ist zumindest von einem Ladezustand der Akkuvorrichtung 11 und einer verfügbaren Ladezeit abhängig. Sind beide Ladeeinheiten 12, 14 aktiv, ist die Steuer- und Regeleinheit 17 dazu vorgesehen, die Umschalteinheit 19 in Abhängigkeit von dem Ladeparameter zu schalten. Ist eine verfügbare Ladezeit und ein Ladezustand der Akkuvorrichtung 11 gering, so ist der Ladeparameter so ausgebildet, dass die Steuer- und Regeleinheit 17 die erste Ladeeinheit 12 mit der Akkuvorrichtung 11 verbindet, da über diese eine höhere Energieübertragung stattfinden kann. Sind eine verfügbare Ladezeit und/oder der Ladezustand der Akkuvorrichtung 11 hoch, ist der Ladeparameter so ausgebildet, dass die Steuer- und Regeleinheit 17 die zweite Ladeeinheit 14 mit der Akkuvorrichtung 11 verbindet.

Die Kraftfahrzeugvorrichtung weist ein Bedienelement 18 auf, das dazu vorgesehen ist, einem Bediener die direkte Auswahl der Ladeeinheit 12, 14 zu ermöglichen. Das Bedienelement 18 ist dabei in einem für den Bediener gut zugänglichen Bereich des Kraftfahrzeugs, beispielsweise auf einem Armaturenbrett in einem Fahrerbereich, angebracht. Durch Betätigen des Bedienelements 18 kann ein Bediener zwischen der ersten Ladeeinheit 12 und der zweiten Ladeeinheit 14 manuell umschalten.

## Patentansprüche

1. Kraftfahrzeugvorrichtung, insbesondere eine Elektro- und/oder Hybridkraftfahrzeugvorrichtung, mit einer Ladevorrichtung (10) zum Laden einer Akkuvorrichtung (11), wobei die Ladevorrichtung (10) eine erste Ladeeinheit (12), die zum Laden der Akkuvorrichtung (11) ein Steckerelement (13) aufweist, das für eine kontaktbehaftete Energieübertragung vorgesehen ist,
und eine zweite Ladeeinheit (14), die zum Laden der Akkuvorrichtung (11) eine Energieübertragungseinheit (15) aufweist, die für eine kontaktlose Energieübertragung vorgesehen ist, aufweist,
wobei die Ladevorrichtung (10) eine Ladeelektronik (16) aufweist, die einstückig für die zumindest zwei Ladeeinheiten (12, 14) vorgesehen ist und eine Umschalteinheit (19) aufweist, mittels der zwischen den beiden Ladeeinheiten (12, 14) umgeschaltet werden kann, wobei die Kraftfahrzeugvorrichtung eine Steuer- und/oder Regeleinheit (17) aufweist, die zur Erkennung der aktiven Ladeeinheit (12, 14) vorgesehen ist und bei einer gleichzeitigen Aktivierung der Ladeeinheiten (12, 14) dazu ausgelegt ist, die Umschalteinheit (19) in Abhängigkeit von zumindest einem Ladeparameter zu schalten, **dadurch gekennzeichnet, dass**
der Ladeparameter von einem Ladezustand der Akkuvorrichtung (11) abhängig ist.

2. Kraftfahrzeugvorrichtung nach Anspruch 1,
**dadurch gekennzeichnet, dass**
die Ladeelektronik (16) einen Gleichrichter (20) aufweist, der dazu vorgesehen ist, für beide Ladeeinheiten (12, 14) eine Energieübertragung bereitzustellen.

3. Kraftfahrzeugvorrichtung nach Anspruch 1 oder 2,
**dadurch gekennzeichnet, dass**
die Steuer- und/oder Regeleinheit (17) dazu vorgesehen ist, die Akkuvorrichtung (11) über die Umschalteinheit (19) lediglich mit einer aktiven Ladeeinheit (12, 14) zu verbinden.

4. Kraftfahrzeugvorrichtung nach einem der vorhergehenden Ansprüche,
**gekennzeichnet durch**
ein Bedienelement (18), das dazu vorgesehen ist, einem Bediener die direkte Auswahl der Ladeeinheit (12, 14) zu ermöglichen.

5. Kraftfahrzeugvorrichtung nach einem der vorhergehenden Ansprüche,
**dadurch gekennzeichnet, dass**
der Ladeparameter zum Schalten der Umschalteinheit (19) auch noch von einer verfügbaren Ladezeit abhängig ist.

## Claims

1. Motor vehicle device, in particular a device for an electric and/or hybrid vehicle, having a charging device (10) for charging an accumulator device (11), wherein the charging device (10) comprises a first charging unit (12) with a plug element (13) for charging the accumulator device (11), which is provided for an energy transfer requiring contact,
and a second charging unit (14) comprising an energy transfer unit (15) provided for contactless energy transfer,
wherein the charging device (10) has electronic charging circuitry (16) provided integrally for the at least two charging units (12, 14) and a switching unit (19) by means of which switching between the two charging units (12, 14) can be carried out, wherein the motor vehicle device comprises a control and/or regulating unit (17) provided in order to recognise the active charging unit (12, 14)
and which is designed, in the event of simultaneous activation of the charging units (12, 14), to switch over the switching unit (19) as a function of a charging parameter,
**characterised in that**
the charging parameter is a function of a charge condition of the accumulator device (11).

2. Motor vehicle device according to Claim 1,
**characterised in that**
the charging electronic circuitry (16) comprises a rectifier (20) provided so as to enable energy transfer by both charging units (12, 14).

3. Motor vehicle device according to Claims 1 or 2,
**characterised in that**
the control and/or regulating unit (17) is provided in order to connect the accumulator device (11) by way of the switching unit (19) only to an active charging unit (12, 14).

4. Motor vehicle device according to any of the preceding claims,
**characterised by**
an operator element (18) provided in order to enable an operator directly to select the charging unit (12, 14).

5. Motor vehicle device according to any of the preceding claims,
**characterised in that**
the charging parameter for switching over the switching unit (19) is also a function of an available charging time.

## Revendications

1. Dispositif de véhicule automobile, en particulier dispositif de véhicule automobile hybride et/ou électrique, comprenant un dispositif de recharge (10) destiné à recharger un dispositif d'accumulateur (11), le dispositif de recharge (10) présentant une première unité de recharge (12) qui comprend pour charger le dispositif d'accumulateur (11) un élément de fiche (13) qui sert au un transfert d'énergie par contact, et une seconde unité de recharge (14) qui présente, pour recharge le dispositif de recharge (11), une unité de transfert d'énergie (15) qui sert au transfert d'énergie sans contact, le dispositif de recharge (10) présentant une électronique de recharge (16) conçue d'un seul tenant pour lesdites deux unités de recharge (12, 14) et une unité de commutation (19) au moyen de laquelle il est possible de commuter entre les deux unités de recharge (12, 14), le dispositif de véhicule automobile présentant une unité de commande et/ou de réglage (17) qui sert à la reconnaissance de l'unité de recharge active (12, 14) et lors d'une activation simultanée des unités de recharge (12, 14), à la commutation de l'unité de commutation (19), en fonction d'au moins un paramètre de recharge, **caractérisé en ce que** le paramètre de recharge dépend d'un état de recharge du dispositif d'accumulateur (11).

2. Dispositif de véhicule automobile selon la revendication 1, **caractérisé en ce que** l'électronique de recharge (16) présente un redresseur (20) qui sert à transférer l'énergie pour les deux unités de recharge (12, 14).

3. Dispositif de véhicule automobile selon la revendication 1 ou 2, **caractérisé en ce que** l'unité de commande et/ou de réglage (17) sert à relier le dispositif d'accumulateur (11) par l'intermédiaire de l'unité de permutation (19) uniquement à une unité de recharge active (12, 14).

4. Dispositif de véhicule automobile selon l'une quelconque des revendications précédentes, **caractérisé par** un élément de commande (18) qui sert à permettre à un utilisateur de sélectionner directement l'unité de recharge (12, 14).

5. Dispositif de véhicule automobile selon l'une quelconque des revendications précédentes, **caractérisé en ce que** le paramètre de recharge pour la commutation de l'unité de permutation (19) dépend également encore d'une unité de recharge disponible.
